# EUROPÄISCHE PATENTSCHRIFT

(11) **EP 3 088 087 B1**
(45) Veröffentlichungstag und Bekanntmachung des Hinweises auf die Patenterteilung: **23.10.2019**
(21) Anmeldenummer: 16166257.2
(22) Anmeldetag: 20.04.2016
(51) Int. Cl.: B05B 1/02, B05B 1/14, B05B 1/34, B05B 12/16, B05B 1/06

(54) **SPRÜHDÜSE UND VERFAHREN ZUM ERZEUGEN VON NICHT RUNDEN SPRÜHKEGELN**
SPRAY NOZZLE AND METHOD FOR PRODUCING NON-ROUND SPRAY CONES
BUSE DE PULVERISATION ET PROCEDE DE PRODUCTION DE CONES DE PULVERISATION NON ARRONDIS

(30) Priorität: 28.04.2015 DE 102015207741
(43) Veröffentlichungstag der Anmeldung: 02.11.2016
(73) Patentinhaber: Lechler GmbH, 72555 Metzingen (DE)
(72) Erfinder: BRAUN, Patrick, 72587 Römerstein (DE); HÜTTNER, Petra, 72764 Reutlingen (DE); SPEIER, Jürgen, 72768 Reutlingen (DE)
(74) Vertreter: Patentanwälte Ruff, Wilhelm, Beier, Dauster & Partner mbB

(56) Entgegenhaltungen:
- WO-A2-2013/028165
- CN-Y- 201 172 011
- FR-A- 1 562 357
- FR-A1- 2 372 057
- US-A- 1 668 271
- US-A- 1 780 233
- US-A- 5 622 489
- US-A1- 2001 010 341

## Beschreibung

Die Erfindung betrifft eine Sprühdüse mit einem Düsengehäuse, wenigstens einer in dem Düsengehäuse angeordneten Drallkammer und wenigstens einer Austrittsöffnung, wobei die Austrittsöffnung am Ende eines Austrittskanals angeordnet ist, der von der Drallkammer ausgeht und sich in Richtung auf die Austrittsöffnung zu aufweitet, wobei am Übergang der Drallkammer in den Austrittskanal eine Engstelle vorgesehen ist und der Winkel der Wandung des Austrittskanals von der Engstelle aus in Richtung auf die Austrittsöffnung zu stetig zunimmt oder abschnittsweise gleich bleibt. Die Erfindung betrifft auch ein Verfahren zum Erzeugen eines Sprühkegels mit nicht runden, also von der Kreisform abweichenden Querschnitt.

Aus der europäischen Patentschrift EP 1 491 260 B1 ist eine Doppeldrallsprühdüse bekannt, die zwei Drallkammern aufweist, von denen jeweils ein Austrittskanal ausgeht, der sich in Richtung auf eine Austrittsöffnung zu aufweitet. Ein Winkel der Wandung des Austrittskanals zu einer Mittellängsachse des Austrittskanals nimmt in Richtung auf die Austrittsöffnung hin in einigen Abschnitten stetig zu, in anderen Abschnitten bleibt er gleich. Die gezeigte Doppeldrallsprühdüse weist beide Austrittsöffnungen zur selben Seite des Düsengehäuses hin auf. Die beiden Austrittsöffnungen sind in einem Winkel zueinander angeordnet. Die beschriebene Doppeldrallsprühdüse wird beispielsweise in Rauchgasreinigungsanlagen, speziell Gaswäschern, eingesetzt.

In der deutschen Patentschrift DE 100 33 781 C1 ist eine Doppeldrallsprühdüse beschrieben, die zwei Drallkammern und von den Drallkammern jeweils ausgehende und bis zu einer Austrittsöffnung hin laufende Austrittskanäle aufweist. Die Austrittsöffnungen sind zu gegenüberliegenden Seiten des Gehäuses hin ausgerichtet.

Aus der französischen Offenlegungsschrift FR 2 372 057 A1 eine Axialdüse für eine Waschanlage für Kraftfahrzeugleuchten bekannt. Die Axialdüse weist einen Düsenkörper mit einem Durchflusskanal und einem Drallkörper auf. Eine Düsenmündung an einem Ende des Düsenkörpers ist an die Form der Kraftfahrzeugleuchte angepasst.

Aus der Offenlegungsschrift US 2001/0010341 A1 ist bekannt, dass ein axial durchströmtes Einspritzventil eine Austrittsöffnung mit einem konstanten Winkel aufweist.

Aus der US-Patentschrift US 5 622 489 A ist ein Kraftstoffzerstäuber bekannt, dessen Gehäuse axial durchströmt wird. Von einer Kreisform abweichend geformte Austrittsöffnungen lenken Kraftstoff um und zerstäuben diesen.

Die internationale Offenlegungsschrift WO 2013/028165 A2 beschreibt gebündelte Axialdüsen.

Das chinesische Gebrauchsmuster CN 201 172 011Y beschreibt eine Tangentialdüse mit einer Austrittsöffnung, die außermittig im Düsenkörper angeordnet ist.

Aus der französischen Patentschrift FR 1 562 357 ist eine Sprühdüse zum Besprühen einer Windschutzscheibe eines Kraftfahrzeugs bekannt, die einen im Querschnitt linsenförmigen Austrittskanal aufweist. Der Querschnitt des Austrittskanals vergrößert sich ausgehend von einer Engstelle zwischen einer Drallkammer und dem Austrittskanal. Am Übergang von der Drallkammer in den Austrittskanal weist die Engstelle einen linsenförmigen Querschnitt auf. Die Engstelle kann auch eine elliptische Form aufweisen, die sich aus dem Verschneiden eines zylindrischen Kanals mit zueinander parallelen Schnittflächen ergibt, die dann Flächen zum Formen eines Austrittsstrahls bilden.

Aus der US-Patentschrift US 1,780,233 ist ein Viereckregner zum Beregnen von Rasenflächen bekannt. Eine Drallkammer weist einen kreisförmigen Querschnitt auf. Eine Engstelle am Übergang von der Drallkammer zu einem Austrittskanal ist quadratisch ausgebildet. An die Engstelle schließt sich ein Austrittskanal in Form eines Pyramidenstumpfes an, der an einer quadratischen Austrittsöffnung endet, die flächenmäßig größer ist als die quadratisch ausgebildete Engstelle.

Aus der US-Patentschrift US 1,668,271 ist ein Viereckregner zum Beregnen von Rasenflächen bekannt. An eine kreisförmige Drallkammer schließt sich ein Ausgangskanal an, der einen quadratischen Querschnitt hat, sich zunächst bis zu einer im Querschnitt quadratischen Engstelle verengt und dann wieder bis zu einer quadratischen Austrittsöffnung erweitert.

Mit der Erfindung soll eine Sprühdüse in Bezug auf die Flexibilität ihrer Anwendung verbessert werden.

Erfindungsgemäß ist hierzu eine Sprühdüse mit einem Düsengehäuse, wenigstens einer in dem Düsengehäuse angeordneten Drallkammer und wenigstens einer Austrittsöffnung vorgesehen, wobei die Austrittsöffnung am Ende eines Austrittskanals angeordnet ist, der von der Drallkammer ausgeht und sich in Richtung auf die Austrittsöffnung zu aufweitet, wobei am Übergang der Drallkammer in den Austrittskanal eine Engstelle angeordnet ist und wobei der Winkel der Wandung des Austrittskanals von der Engstelle aus in Richtung auf die Austrittsöffnung zu stetig zunimmt oder abschnittsweise gleich bleibt, bei der eine Form der Austrittsöffnung von einer Kreisform abweicht und bei der ein Winkel der Wandung des Austrittskanals an der Austrittsöffnung in Umfangsrichtung der Austrittsöffnung gesehen nicht konstant ist, wobei ein Anschluss für eine zu versprühende Flüssigkeit vorgesehen ist, über den die zu versprühende Flüssigkeit der wenigstens einen Drallkammer tangential zugeführt wird und wobei der Austrittskanal am Übergang von der Drallkammer in den Austrittskanal einen kreisförmigen Querschnitt aufweist.

Indem eine Form der Austrittsöffnung von einer Kreisform abweicht und ein Winkel der Wandung des Austrittskanals an der Austrittsöffnung in Umfangsrichtung der Austrittsöffnung gesehen nicht konstant ist, kann eine Querschnittsform des ausgegebenen Sprühkegels von einer Kreisform abweichen. Dies ist speziell dann vorteilhaft, wenn die räumlichen Gegebenheiten einen nicht kreisförmigen Sprühkegel ideal erscheinen lassen, um eine möglichst gute Abdeckung mit dem Sprühkegel zu erzielen. Dies kann insbesondere beispielsweise in Gaswäschern der Fall sein, wenn Sprühdüsen im Bereich der Wandung eines kreiszylinderförmigen Gaswäschers angeordnet werden. Dabei soll in der Regel verhindert werden, dass in den Gaswäscher eingesprühte Flüssigkeit von der Sprühdüse direkt auf die Wandung des Gaswäschers trifft. Mit der erfindungsgemäßen Düse kann eine von der Kreisform abweichende Querschnittsform des Sprühkegels eingestellt werden, so dass der von der Sprühdüse ausgegebene Sprühkegel sich in den Innenraum des Gaswäschers hinein und nicht in Richtung auf die Wand zu ausbreitet. Eine Engstelle zwischen Drallkammer und Austrittskanal kann durch eine umlaufende Kante und/oder einen Anfangsabschnitt des Austrittskanals gebildet sein, wobei die Wandung des Austrittkanals in diesem Anfangsabschnitt im wesentlichen parallel zu einer Mittellängsachse des Austrittskanals verläuft.

Gemäß der Erfindung weist der Austrittskanal am Übergang von der Drallkammer in den Austrittskanal einen kreisförmigen Querschnitt auf.

Ein solcher kreisförmiger Querschnitt des Austrittskanals am Übergang von der Drallkammer in den Austrittskanal ist für eine gute Verteilung der zu versprühenden Flüssigkeit in dem ausgegebenen Sprühkegel vorteilhaft. Beispielsweise wird ein Hohlkegelspray ausgegeben. Der kreisförmige Querschnitt des Austrittskanals am Übergang von der Drallkammer in den Austrittskanal sorgt dann für eine gleichmäßige Verteilung der Flüssigkeit in dem ausgegebenen Hohlkegelspray.

In Weiterbildung der Erfindung liegt der Winkel der Wandung des Austrittskanals zur Mittellängsachse des Austrittskanals an der Austrittsöffnung in einem Bereich zwischen 0° und 90°.

Überraschenderweise hat sich herausgestellt, dass der Winkel der Wandung des Austrittskanals an der Austrittsöffnung in einem sehr großen Bereich, nämlich zwischen 0° und 90° zur Mittellängsachse des Austrittskanals, schwanken kann und dennoch das Sprühverhalten der Sprühdüse immer noch gut ist. Speziell kann trotz des großen Winkels, in dem der Winkel der Wandung des Austrittskanals zur Mittellängsachse liegen kann, immer noch eine gute und gleichmäßige Verteilung der Flüssigkeit in dem ausgegebenen Sprühkegel erzielt werden.

In Weiterbildung der Erfindung ändert sich ein Winkel der Wandung des Austrittskanals an der Austrittsöffnung über den Umfang der Austrittsöffnung gesehen zwischen 32,5° und 65° zur Mittellängsachse des Austrittskanals.

Eine solche Bemessung der Winkeländerung der Wandung führt zur Ausbildung eines ovalen Sprühstrahls mit sehr gleichmäßiger Flüssigkeitsverteilung innerhalb des Sprühstrahls. Wird der Winkel zwischen einander gegenüberliegenden Punkten der Wandung des Austrittskanals an der Austrittsöffnung gemessen, ändert sich der Winkel der Wandung zwischen 75° und 130°.

In Weiterbildung der Erfindung weist die Austrittsöffnung eine ovale oder elliptische Form auf.

Auf diese Weise kann einem einzelnen Sprühkegel eine ovale oder elliptische Querschnittsform verliehen werden. Durch die erfindungsgemäße Ausgestaltung der Sprühdüse ist dies bei einer guten Flüssigkeitsverteilung innerhalb des Sprühkegels möglich.

In Weiterbildung der Erfindung sind zwei Drallkammern und zwei Austrittsöffnungen vorgesehen, wobei die Austrittsöffnungen so angeordnet sind, dass Sprühstrahlen durch beide Austrittsöffnungen zur gleichen Seite des Gehäuses hin austreten.

In Weiterbildung der Erfindung sind zwei Drallkammern und zwei Austrittsöffnungen vorgesehen, wobei die Austrittsöffnungen so angeordnet sind, dass Sprühstrahlen durch die beiden Austrittsöffnungen zu gegenüberliegenden Seiten des Gehäuses hin austreten.

In Weiterbildung der Erfindung wird das Düsengehäuse gegossen oder gespritzt und nachfolgend gebrannt oder gesintert.

Auf diese Weise können die sich ändernden Winkel der Wandung des Austrittskanals und die von der Kreisform abweichende Form der Austrittsöffnung hochpräzise und gleichzeitig wirtschaftlich realisiert werden.

Das der Erfindung zu Grunde liegende Problem wird auch durch ein Verfahren mit den Merkmalen von Anspruch 8 gelöst.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine erfindungsgemäße Sprühdüse in einer Ansicht von schräg oben,
- Fig. 2: die Sprühdüse der Fig. 1 von unten,
- Fig. 3: eine abschnittsweise Schnittansicht auf die Schnittebene III-III in Fig. 1,
- Fig. 4: eine abschnittsweise Schnittansicht auf die Schnittebene IV-IV in Fig. 1,
- Fig. 5: eine Draufsicht auf eine erfindungsgemäße Sprühdüse gemäß einer weiteren Ausführungsform der Erfindung,
- Fig. 6: eine Draufsicht auf eine Anordnung mit einer konventionellen Sprühdüse,
- Fig. 7: eine Seitenansicht der Anordnung der Fig. 6,
- Fig. 8: eine Draufsicht auf eine Anordnung mit einer erfindungsgemäßen Sprühdüse gemäß einer weiteren Ausführungsform,
- Fig. 9: die Anordnung der Fig. 8 in einer Seitenansicht,
- Fig. 10: eine Draufsicht auf eine Anordnung mit zwei konventionellen Sprühdüsen,
- Fig. 11: eine Seitenansicht der Anordnung der Fig. 10,
- Fig. 12: eine Draufsicht auf eine Anordnung mit zwei erfindungsgemäßen Sprühdüsen gemäß einer weiteren Ausführungsform,
- Fig. 13: eine Seitenansicht der Anordnung der Fig. 12,
- Fig. 14: eine Draufsicht auf eine Anordnung mit zwei erfindungsgemäßen Sprühdüsen gemäß einer weiterer Ausführungsform,
- Fig. 15: eine Seitenansicht der Anordnung der Fig. 14,
- Fig. 16: eine Draufsicht auf eine Anordnung mit zwei konventionellen Sprühdüsen,
- Fig. 17: eine Seitenansicht der Anordnung der Fig. 16,
- Fig. 18: eine Draufsicht auf eine Anordnung mit zwei konventionellen Sprühdüsen,
- Fig. 19: eine Seitenansicht der Anordnung der Fig. 18,
- Fig. 20: eine Draufsicht auf eine Anordnung mit zwei erfindungsgemäßen Sprühdüsen gemäß einer weiteren Ausführungsform,
- Fig. 21: eine Seitenansicht der Anordnung der Fig. 20,
- Fig. 22: eine Draufsicht auf eine Anordnung mit zwei erfindungsgemäßen Sprühdüsen gemäß einer weiteren Ausführungsform,
- Fig. 23: eine Seitenansicht der Anordnung der Fig. 22,
- Fig. 24: eine Draufsicht auf eine Anordnung mit zwei konventionellen Sprühdüsen,
- Fig. 25: die Anordnung der Fig. 24 in einer Seitenansicht,
- Fig. 26: eine Draufsicht auf eine Anordnung mit zwei konventionellen Sprühdüsen,
- Fig. 27: eine Seitenansicht der Anordnung der Fig. 26,
- Fig. 28: eine Draufsicht auf eine Anordnung mit zwei erfindungsgemäßen Sprühdüsen gemäß einer weiteren Ausführungsform,
- Fig. 29: eine Seitenansicht der Anordnung der Fig. 28,
- Fig. 30: eine Draufsicht auf eine Anordnung mit zwei erfindungsgemäßen Sprühdüsen gemäß einer weiteren Ausführungsform,
- Fig. 31: eine Seitenansicht der Anordnung der Fig. 30,
- Fig. 32: eine Draufsicht auf eine Anordnung mit zwei konventionellen Sprühdüsen,
- Fig. 33: eine Seitenansicht der Anordnung der Fig. 32,
- Fig. 34: eine Draufsicht auf eine Anordnung mit zwei konventionellen Sprühdüsen,
- Fig. 35: eine Seitenansicht der Anordnung der Fig. 34,
- Fig. 36: eine Draufsicht auf eine Anordnung mit zwei erfindungsgemäßen Sprühdüsen gemäß einer weiteren Ausführungsform,
- Fig. 37: eine Seitenansicht der Anordnung der Fig. 36,
- Fig. 38: eine Draufsicht auf eine Anordnung mit zwei erfindungsgemäßen Sprühdüsen gemäß einer weiteren Ausführungsform und
- Fig. 39: eine Seitenansicht der Anordnung der Fig. 38.

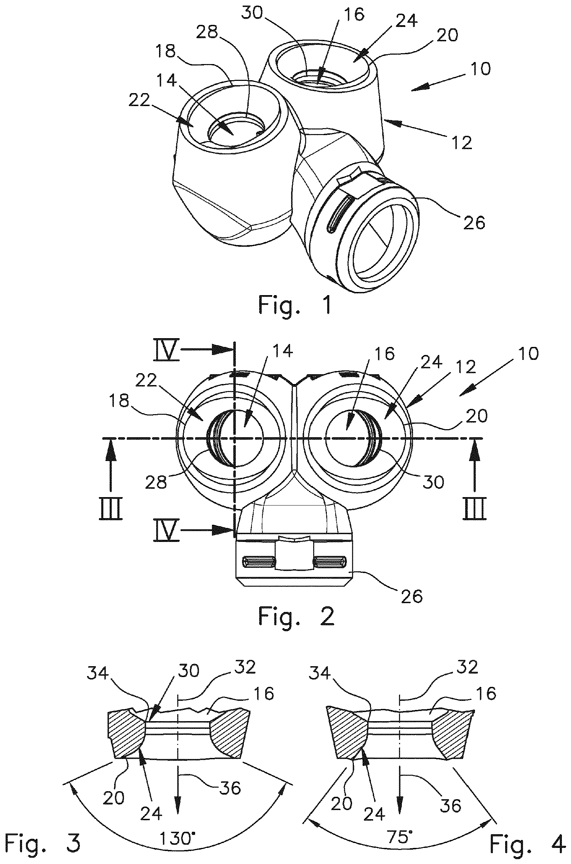

Fig. 1 und Fig. 2 zeigen eine erfindungsgemäße Sprühdüse 10, die ein Düsengehäuse 12 mit zwei Drallkammern 14, 16 und zwei Austrittsöffnungen 18, 20 aufweist. In Fig. 2 geht der Blick des Betrachters in die beiden Austrittskanäle 22, 24 hinein, die dann in jeweils eine der Drallkammern 14, 16 übergehen. Die beiden Drallkammern 14, 16 sind mit einem gemeinsamen Anschluss 26 verbunden. Über den Anschluss 26 wird zu versprühende Flüssigkeit zugeführt, gelangt in die beiden Drallkammern 14, 16, wird den Drallkammern 14, 16 jeweils tangential zugeführt, gelangt von dort aus durch jeweils eine Engstelle 28, 30 in den jeweiligen Austrittskanal 22, 24 und verlässt in Form jeweils eines Hohlkegelsprays dann das Gehäuse 12.

Bereits anhand der Darstellung der Fig. 1 ist zu erkennen, dass die Form der beiden Austrittsöffnungen 18, 20 jeweils von einer Kreisform abweicht. Die Austrittsöffnungen 18, 20 weisen jeweils eine elliptische Form auf, wobei zu berücksichtigen ist, dass die Mittellängsachsen der beiden Austrittskanäle 22, 24, die an den Austrittsöffnungen 18, 20 enden, nicht senkrecht zur Zeichenebene der Fig. 2 angeordnet sind. Vielmehr sind die Mittellängsachsen der Austrittskanäle 22, 24 auseinanderlaufend angeordnet. Die beiden erzeugten Sprühstrahlen laufen dadurch voneinander weg. Eine entsprechende Ausbildung einer Doppeldrallsprühdüse ist aus der europäischen Patentschrift EP 1 491 260 B1 bekannt, auf die diesbezüglich verwiesen wird.

Trotz der durch die schräge Anordnung leicht verzerrten Darstellung der Fig. 2 ist dieser Figur auch zu entnehmen, dass ein Querschnitt der Austrittskanäle 22, 24 an einer Stelle 28 bzw. 30, also jeweils am Übergang zwischen den Drallkammern 14, 16 und dem Austrittskanal 22, 24, kreisförmig ist. Durch den kreisförmigen Querschnitt am Übergang zwischen der jeweiligen Drallkammer 14, 16 und den Austrittskanälen 22, 24 wird eine gleichmäßige Verteilung der Flüssigkeit innerhalb des ausgegebenen Sprühstrahls erreicht.

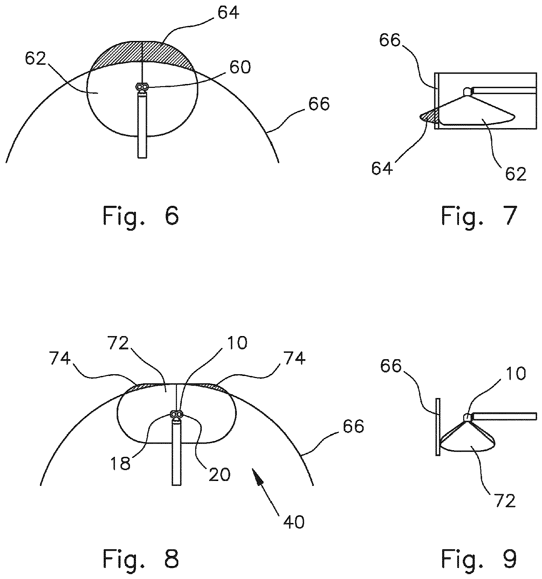

Indem nun die Austrittsöffnungen 20 von der Kreisform abweichen, kann den beiden ausgegebenen Sprühkegeln jeweils eine von der Kreisform abweichende Querschnittsform gegeben werden. Bei der in Fig. 1 dargestellten Düse tritt aus den Austrittsöffnungen 18, 20 jeweils ein Hohlkegelspray mit elliptischem Querschnitt aus. In der Überlagerung dieser beiden elliptischen Sprühkegel ergibt sich dann ein etwa ovaler Sprühkegel, vgl. Fig. 8.

Die Darstellung der Fig. 3 zeigt eine abschnittsweise und schematische Schnittansicht auf die Schnittebene III-III der Fig. 2. Sinn und Zweck der Fig. 3 ist es, die Form der Austrittsöffnungen 18, 20 und der Austrittskanäle 22, 24 in der Schnittebene III-III zu verdeutlichen. Aus diesem Grund wurden lediglich die Austrittsöffnung 20 und der Austrittskanal 24 in Fig. 3 geschnitten dargestellt, die Austrittsöffnung 18 und der Austrittskanal 22 sind jedoch identisch ausgebildet. Gleiches gilt für die Darstellung der Fig. 4. Im Rahmen der Erfindung sind auch Doppel- oder Mehrfachsprühdüsen mit unterschiedlich ausgebildeten Austrittskanälen möglich. In der Darstellung der Fig. 3 ist eine Mittellängsachse 32 des Austrittskanals 24 der Sprühdüse 10 eingezeichnet. Am oberen Ende der Darstellung der Fig. 3 ist noch ein Abschnitt der Drallkammer 16 zu erkennen. An einer leicht abgerundeten Kante 34 endet die Drallkammer 16 und der Austrittskanal 24 beginnt. Wie zu erkennen ist, ist am Beginn des Austrittskanals 24, also unmittelbar nach der abgerundeten Kante 34, eine Wandung des Austrittskanals 24 im wesentlichen parallel zur Mittellängsachse 32 angeordnet. Tatsächlich weist die Wandung des Austrittskanals 24 in diesem Bereich einen Winkel von etwa 3° zur Mittellängsachse 32 auf, so dass sich der Austrittskanal 24 von seinem Beginn an in Strömungsrichtung öffnet. Dadurch ist eine bei der Herstellung der Sprühdüse vorteilhafte Entformungsschräge gebildet. Im weiteren Verlauf des Austrittskanals 24, also in Strömungsrichtung, die mittels eines Pfeils 36 angedeutet ist, nimmt ein Winkel zwischen der Mittellängsachse 32 und einer Wandung des Austrittskanals 24 stetig zu, bis er einen Wert von 65° erreicht hat und mit diesem konstanten Winkel dann bis zur Austrittsöffnung 20 weiterläuft. Stromaufwärts der Austrittsöffnung 20 ist dadurch in der Schnittebene III-III eine geradlinige Begrenzung mit einem Öffnungswinkel von 130° angeordnet, wie in Fig. 3 dargestellt ist. Der Winkel der Wandung des Austrittskanals 24 nimmt somit ausgehend von einem Wert von etwa 0° zur Mittellängsachse, bei der gezeigten Ausführungsform 3°, also einer im wesentlichen parallelen Anordnung der Mittellängsachse und der Wand des Austrittskanals 24 zu Beginn des Austrittskanals, entweder stetig zu oder ist abschnittsweise konstant.

Ein in Strömungsrichtung 36 austretendes Spray, das in Einzeltropfen zerfällt, wird sich beim Durchgang durch den Austrittskanal 24 aufweiten, sobald es die Engstelle 30 passiert hat, die im wesentlichen durch die umlaufende Kante 34 gebildet ist, soweit dies die Wandung des Austrittskanals 24 zulässt. In der Schnittebene III-III wird der Sprühkegel somit die Austrittsöffnung 20 mit einem Sprühwinkel von etwas weniger als 130° verlassen.

Die Darstellung der Fig. 4 zeigt eine schematische, abschnittsweise Schnittansicht auf die Schnittebene IV-IV in Fig. 2. Der Austrittskanal 24 weist an seinem Beginn, also am Übergang zwischen der Drallkammer 16 und der abgerundeten Kante 34, zunächst eine im wesentlichen parallel zur Mittellängsachse 32 angeordnete Wandung auf, die tatsächlich einen Winkel von 3° zur Mittellängsachse 32 einnimmt. In Strömungsrichtung, angedeutet durch den Pfeil 36, nimmt der Winkel der Wandung des Austrittskanals 24 zur Mittellängsachse 32 dann stetig zu, bis er einen Wert von 32,5° erreicht hat. Mit diesem konstanten Winkel läuft die Wandung des Austrittskanals 24 dann bis zur Austrittsöffnung 20. Der Bereich unmittelbar stromaufwärts der Austrittsöffnung 20 verläuft in der Schnittansicht der Ebene IV-IV somit geradlinig. Stromaufwärts der Austrittsöffnung 20 ist dadurch in der Schnittebene IV-IV eine geradlinige Begrenzung mit einem Öffnungswinkel von 75° angeordnet. Es sei aber daran erinnert, dass sich der Winkel der Wandung des Austrittskanals 24 entlang dem Umfang der Austrittsöffnung 20 ändert und in der Schnittebene III-III der Fig. 2, siehe Fig. 3, einen Winkel von 65° zur Mittellängsachse 32 einnimmt. Der Bereich unmittelbar stromaufwärts der Austrittsöffnung 20 ist somit nicht kreiskegelförmig, sondern hat eine unregelmäßige Form, die dadurch bestimmt ist, dass der Winkel der Wandung des Austrittskanals 24 über die Hälfte der Länge des Umfangs der Austrittsöffnung 20 sich von einem Wert von 32,5° zur Mittellängsachse auf einen Wert von 65° zur Mittellängsachse ändert und wieder zurück.

Ein aus dem Austrittskanal 24 austretendes Tropfenspray wird sich, sobald es die durch die Kante 34 gebildete Engstelle passiert hat und soweit dies die Wandung des Austrittskanals 24 erlaubt, bis zur Austrittsöffnung 20 hin aufweiten, so dass es an der Austrittsöffnung in der Ebene IV-IV mit einem Sprühwinkel von etwas weniger als 75° austritt.

Im Ergebnis hat ein aus dem Austrittskanal 24 austretender Sprühkegel somit eine Geometrie mit einem nicht runden und bei der dargestellten Ausführungsform elliptischen Querschnitt. In der SchnittebeneIII-III, siehe Fig. 2 und Fig. 3, beträgt der Sprühwinkel etwas weniger als 130°. In der SchnittebeneIV-IV, siehe Fig. 2 und Fig. 4, beträgt der Sprühwinkel etwas weniger als 75°.

Der erhebliche Vorteil der erfindungsgemäßen Düse ist dabei, dass ein solcher, allgemein von einer Kreisform abweichender Querschnitt eines austretenden Sprühkegels alleine durch die Gestaltung der Wandung und speziell des Winkels der Wandung des Austrittskanals 24 zur Mittellängsachse 32 erzielt wird. Die Konstruktion der Drallkammer 16 sowie des Gehäuses der Düse muss dahingegen nicht geändert werden. Je nach dem erforderlichen Anwendungsfall und der gewünschten Querschnittsform des austretenden Sprühkegels kann der Austrittskanal 24 angepasst werden. Zum Erzeugen des Sprühkegels mit nicht rundem bzw. von einer Kreisform abweichendem Querschnitt wird in der Drallkammer 14, 16 ein Drall erzeugt, um Fliehkräfte auf die durchströmende Flüssigkeit zu erzeugen und diese somit in Rotation zu versetzen. Mittels der Engstelle 28, 30, die im wesentlichen durch die umlaufende Kante 34 gebildet ist und die zwischen der Drallkammer 14, 16 und dem Austrittskanal 22, 24 liegt, wird der Volumenstrom durch die Düse gedrosselt und eingestellt. Die durch die Kante 34 und den nachfolgenden Beginn des Austrittskanals 22, 24 gebildete Verjüngung ist dabei so ausgebildet, dass die durchströmende Flüssigkeit gleichmäßig auf den Umfang dieser Engstelle verteilt ist. Hier spielt der in der Drallkammer erzeugte Drall und die somit in der Drallkammer rotierende Flüssigkeit eine wichtige Rolle. Im Austrittskanal 22, 24 wird dann der nicht runde Sprühkegel durch die nicht rotationssymmetrisch aufgebaute Wandung des Austrittskanals geformt. Durch unterschiedliche Steigungen bzw. unterschiedliche Winkel wird bis hin zur Austrittsöffnung 18, 20 der Abflugwinkel der Tropfen individuell vorgegeben. Je nach dem, in welchem Wandabschnitt sich Tropfen befinden und welchen Winkel zur Mittelachse dieser Wandabschnitt einnimmt, wird der Abflugwinkel der Tropfen vorgegeben und im Ergebnis wird dadurch ein Sprühkegel mit nicht rundem Querschnitt geformt.

Bei Düsen aus Keramikwerkstoffen oder Sinterwerkstoffen ermöglicht dies ein sehr flexibles Herstellungsverfahren. Das Düsengehäuse 12 mit den beiden Drallkammern und dem Anschluss 26 kann immer mittels derselben Formen hergestellt werden. Lediglich die Düsenmündungen, also die Austrittskanäle 22, 24, werden je nach dem gewünschten Anwendungsfall geändert. Hierzu können dann abgeänderte Formen verwendet werden. Eine Keramikmasse wird somit in die gewünschte Form gebracht und anschließend gebrannt. Auf diese Weise lassen sich vergleichsweise einfach und kostengünstig Düsen mit unterschiedlichen Querschnittsformen der ausgegebenen Sprühstrahlen herstellen. In analoger Weise kann entsprechend bei Düsen vorgegangen werden, die aus Sinterwerkstoffen hergestellt werden. Hier wird beispielsweise ein Metallpulver mit einem Kunststoffbinder vermischt, in eine Form gespritzt und anschließend gesintert, um dann eine aus metallischem Sinterwerkstoff bestehende Düse zu erhalten. Die erfindungsgemäße Sprühdüse kann aber beispielsweise auch aus Kunststoff oder Metall gegossen, im Schichtaufbau hergestellt oder auch mechanisch mittels spanabhebender Verfahren gefertigt werden.

Ein erheblicher Vorteil der erfindungsgemäßen Düse ist, dass durch die Beibehaltung der Form der Drallkammern und auch der Kreisform des Austrittskanals am Beginn der Austrittskanäle 22, 24 eine gleichmäßige Verteilung der Flüssigkeit in den ausgegebenen Sprühstrahlen gewährleistet werden kann. Lediglich die Querschnittsform der Sprühstrahlen wird durch die Gestaltung der Austrittskanäle und die Form der Austrittsöffnungen 18, 20 verändert.

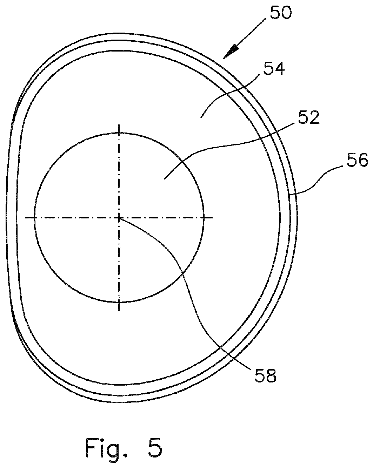

Die Darstellung der Fig. 5 zeigt in einer Draufsicht eine erfindungsgemäße Sprühdüse 50 gemäß einer weiteren Ausführungsform der Erfindung. Die Sprühdüse 50 ist auch als Drallsprühdüse ausgebildet und weist ein Gehäuse mit einer Drallkammer 52 und einem Austrittskanal 54 auf, der sich von einem Übergang zwischen der Drallkammer 52 und dem Austrittskanal 54 bis zu einer Austrittsöffnung 56 erstreckt. Der Blick des Betrachters geht in Fig. 5 entgegen der Sprührichtung der Sprühdüse 50 in den Austrittskanal 54 und in die Drallkammer 52 hinein.

Zu erkennen ist, dass der Austrittskanal am Übergang zwischen der Drallkammer 52 und dem Austrittskanal 54 einen kreisförmigen Querschnitt hat. Im weiteren Verlauf des Austrittskanals 54 zu der Austrittsöffnung 56 hin verändert sich der Querschnitt des Austrittskanals 54, der sich in dieser Richtung auch erweitert. Der Austrittskanal 54 nimmt in Richtung zur Austrittsöffnung 56 eine Querschnittsform an, die etwa einem einseitig abgeplatteten Kreis entspricht. Durch diese Formgebung des Austrittskanals 54 wird auch ein im Betrieb von der Sprühdüse 50 ausgegebener Sprühkegel geformt. Auf einer ebenen Fläche, die senkrecht zu einer Mittelachse 58 der Drallkammer 52 liegt, würde die Sprühdüse 50 eine Sprühbeaufschlagung mit einer Fläche erzeugen, die etwa die Form der Austrittsöffnung 56 hat oder größer ist. Eine solche Sprühbeaufschlagung ist beispielsweise dann vorteilhaft, wenn die Sprühdüse 50 nahe an der Wand eines Prozessraums angeordnet werden soll und es nicht erwünscht ist, dass die Wand des Prozessraums mitbesprüht wird.

Die Darstellung der Fig. 6 zeigt eine Anordnung mit einer konventionellen Doppeldrallsprühdüse 60, die zwei nebeneinander angeordnete Austrittsöffnungen aufweist, die jeweils einen im Querschnitt kreisförmigen Sprühkegel ausgeben. Die Sprühkegel sind dabei nicht parallel zueinander, sondern so voneinander weg ausgerichtet, dass die Mittelachsen der beiden Drallkammern der Sprühdüse 60 mit zunehmendem Abstand von den Austrittsöffnungen in Sprührichtung gesehen auseinanderlaufen.

Dadurch ergibt sich in der Überlagerung der beiden Sprühkegel eine Sprühgeometrie 62, die eine in der Mitte eingeschnürte Form hat. Besonders nachteilig ist aber, dass ein in Fig. 6 schraffiert gezeichneter Anteil 64 einer Sprühgeometrie nicht tatsächlich zum Tragen kommt. Vielmehr würde dieser Anteil 64 der Sprühgeometrie auf eine Wand 66 eines Prozessraums prallen.

Dies ist auch in der Seitenansicht der Fig. 7 zu erkennen. Das in der Seitenansicht der Fig. 7 an und für sich kegelförmige Sprühspray trifft auf die Wand 66 des Prozessraums, so dass der schraffiert dargestellte Anteil 64 der Sprühgeometrie 62 tatsächlich auf die Wand 66 trifft und nicht mehr genutzt werden kann.

Die Darstellung der Fig. 8 zeigt schematisch die erfindungsgemäße Sprühdüse 10 der Fig. 1 bis 4 im eingebauten Zustand, speziell in einem abschnittsweise schematisch dargestellten Gaswäscher 40 von dem lediglich ein Abschnitt seiner Wand 66 dargestellt ist. Der Blick des Betrachters geht in Fig. 4 von oben in den kreiszylinderförmigen Gaswäscher 40 hinein. Die Sprühdüse 10 ist im Randbereich des Gaswäschers 40 angeordnet, wobei Befestigungen nicht dargestellt sind. Die Sprühdüse 10 gibt zwei Sprühkegel aus, wobei lediglich die sich ergebende überlagerte Sprühgeometrie 72 dargestellt ist. Wie ausgeführt wurde, tritt aus jeder der Austrittsöffnungen 18, 20 ein Sprühkegel mit etwa elliptischer Form aus. In der Überlagerung ergibt sich dann eine Sprühgeometrie 72 mit ovalem Querschnitt. Es ist gut zu erkennen, dass aufgrund der Anordnung der Sprühdüse 10 im Randbereich des Gaswäschers 40 eine solche ovale Querschnittsform des Sprühstrahls 72 erwünscht ist. Denn dadurch kann sichergestellt werden, dass im definierten Abstand nur sehr wenig der versprühten Flüssigkeit an die Wandung des Gaswäschers 40 gelangt, gesehen im Vergleich zu einem Sprühkegel mit kreisförmigem Querschnitt.

Mit der erfindungsgemäßen Sprühdüse kann die Querschnittsform einer ausgegebenen Sprühgeometrie, sei es die Querschnittsform eines einzelnen ausgegebenen Sprühkegels oder die Querschnittsform zweier oder mehrerer überlagerter Sprühkegel, in weiten Grenzen eingestellt werden. Je nach dem gegebenen Anwendungsfall und der in dem speziellen Anwendungsfall gewünschten Querschnittsform kann dadurch ein optimales Sprühergebnis erzielt werden.

Die dargestellte Ausführungsform zeigt eine Doppeldrallsprühdüse mit zwei Austrittsöffnungen, die Sprühstrahlen in die gleiche Richtung ausgeben. Die Erfindung kann ersichtlich aber auch auf andere Arten von Sprühdüsen angewendet werden, speziell auf Drallsprühdüsen, die lediglich eine Austrittsöffnung aufweisen oder auf Doppeldrallsprühdüsen, die zwei Austrittsöffnungen haben, aus denen Sprühstrahlen in entgegengesetzten Richtungen austreten. Die Erfindung kann auch Mehrfachsprühdüsen angewendet werden, die mehr als zwei Austrittsöffnungen haben.

Die erfindungsgemäße Doppeldrallsprühdüse 10 ist gemäß Fig. 8 relativ zu der Wand 66 des Prozessraums an der gleichen Stelle wie die Sprühdüse 60 in Fig. 6 angeordnet. In der Fig. 8 ist aber zu erkennen, dass mit der erfindungsgemäßen Doppeldrallsprühdüse 10 eine Sprühgeometrie 72 erzeugt werden kann, die eine ovale Querschnittsform hat. Dies wird durch die Überlagerung der beiden, durch die Doppeldrallsprühdüse 10 erzeugten Sprühkegel erreicht. Es ist bereits in Fig. 8 zu erkennen, dass nur noch ein sehr kleiner Anteil 74 der erzeugten Sprühgeometrie 72 auf die Wand 66 trifft und somit verloren geht.

Dies ist auch in der Seitenansicht der Fig. 9 zu erkennen. Die Sprühgeometrie 72 mit ovaler Querschnittsform weist einen deutlich geringeren Wandverlust auf, da die Sprühgeometrie 72 lediglich in ihrem äußersten Randbereich auf die Wand 66 trifft. Im Vergleich zu der Anordnung mit der konventionellen Doppeldrallsprühdüse 60 der Fig. 6 und 7 kann dadurch ein deutlich verringerter Wandverlust erreicht werden und dennoch kann mit der erfindungsgemäßen Doppeldrallsprühdüse 10 eine großflächige Abdeckung des Prozessraums erreicht werden.

Die erfindungsgemäße Doppeldrallsprühdüse 10 ermöglicht es also, die ausgegebene Sprühgeometrie 72 zu formen und dadurch große Sprühwinkel zu verwenden, ohne an der Wand 66 versprühtes Medium ungenutzt zu verlieren.

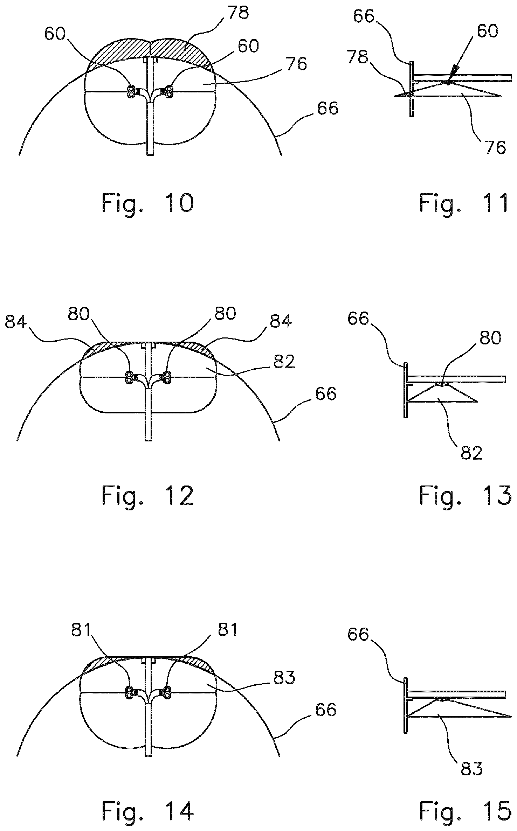

Die Darstellung der Fig. 10 zeigt eine Draufsicht auf eine Anordnung mit zwei konventionellen Doppeldrallsprühdüsen 60. Die Doppeldrallsprühdüsen 60 erzeugen jeweils zwei Sprühkegel mit jeweils kreisförmiger Querschnittsform. In der Überlagerung ergibt sich eine Sprühgeometrie 76, der in der Draufsicht etwa die Form eines zweimal eingeschnürten Ballons aufweist. Es ist zu erkennen, dass durch die Überlagerung der vier von den Doppeldrallsprühdüsen 60 ausgegebenen Sprühkegel in Verbindung mit einem großen Sprühwinkel eine großflächige Abdeckung durch die Sprühgeometrie 76 erreicht werden kann. Allerdings trifft ein erheblicher Anteil 78 der Sprühgeometrie 76 auf die Wand 66 des Prozessraums auf, was durch den schraffiert dargestellten Anteil 78 der Sprühgeometrie 76 angedeutet ist.

Die Seitenansicht der Fig. 11 zeigt deutlich die ausgegebene Sprühgeometrie 76, der teilweise auf die Wand 66 trifft, so dass der Anteil 78 der Sprühgeometrie 76 verloren ist und das versprühte Medium aus diesem Anteil 78 nicht mehr im Prozessraum, beispielsweise zur Gasreinigung, genutzt werden kann.

Die Darstellung der Fig. 12 zeigt eine Anordnung mit zwei erfindungsgemäßen Doppeldrallsprühdüsen 80 gemäß einer weiteren Ausführungsform der Erfindung. Der jeweilige Austrittskanal und die jeweilige Austrittsöffnung der erfindungsgemäßen Doppeldrallsprühdüsen 80 sind so geformt, dass sich in der Überlagerung eine Sprühgeometrie 82 ergibt, die in der Draufsicht der Fig. 12 die Form eines Rechtecks mit abgerundeten Ecken aufweist. Es ist gut zu erkennen, dass wie bei der Anordnung der Fig. 10 eine großflächige Abdeckung durch die Sprühgeometrie 82 erreicht werden kann, dass aber die in Fig. 12 schraffiert dargestellten Anteile 84 deutlich kleiner sind als die Anteile 78 der Anordnung der Fig. 10. Die Formung der Sprühkegel zu einer nicht runden Querschnittsform in den erfindungsgemäßen Doppeldrallsprühdüsen 80 führt zu einer deutlichen Verringerung der Wandverluste, was dadurch zu erkennen ist, dass die schraffiert dargestellten Anteile 84 der Sprühgeometrie 82 deutlich kleiner sind als die Anteile 78 bei der Anordnung der Fig. 10. Mit der Anordnung mit den beiden erfindungsgemäßen Doppeldrallsprühdüsen 80 kann also das versprühte Medium wesentlich besser genutzt werden.

Die Seitenansicht der Fig. 13 zeigt die Anordnung der Fig. 12 in einer Seitenansicht. Es ist zu erkennen, dass die Sprühgeometrie 82 nur zu einem sehr geringen Anteil auf die Wand 66 des Prozessraums auftrifft.

Die Darstellung der Fig. 14 zeigt eine Anordnung mit zwei erfindungsgemäßen Doppelsprühdüsen 81 gemäß einer weiteren Ausführungsform der Erfindung. Der jeweilige Austrittskanal und die jeweilige Austrittsöffnung der erfindungsgemäßen Doppeldrallsprühdüsen 81 sind so geformt, dass sich in der Überlagerung eine Sprühgeometrie 83 ergibt. Die Sprühgeometrie 83 ist dahingehend unsymmetrisch, dass sie sich ausgehend von den Sprühdüsen 81 weiter zum Innenraum der kreisförmigen Wand 66 erstreckt als zur Wand 66 hin.

Die Ansicht der Fig. 15 zeigt die Anordnung der Fig. 14 in einer Seitenansicht. Es ist zu erkennen, dass durch die nicht symmetrische Sprühgeometrie 83 nur ein sehr geringer Anteil der erzeugten Tropfensprays auf die Wand 66 trifft und dass in radialer Richtung von der Wand 66 aus nach innen, in Fig. 15 also nach rechts, eine große Fläche des Prozessraums abgedeckt werden kann.

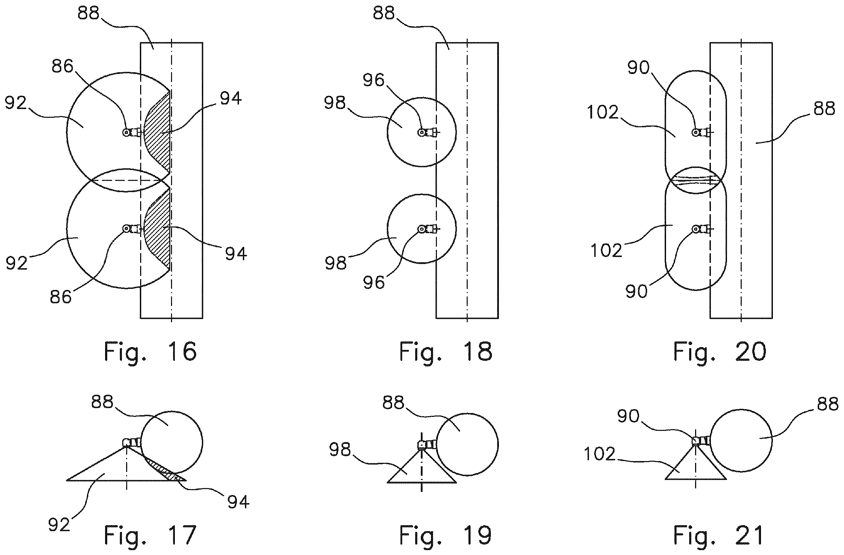

Die Darstellung der Fig. 16 zeigt eine Anordnung mit zwei konventionellen Drallsprühdüsen 86 in einer Draufsicht. Die beiden Drallsprühdüsen 86 erzeugen jeweils einen Sprühkegel mit kreisrunder Querschnittsform. Die Drallsprühdüsen 86 werden aus einer gemeinsamen Sammelrohrleitung 88 mit zu versprühendem Medium versorgt. Die Drallsprühdüsen 86 werden so gewählt, dass sie einen großen Sprühwinkel haben und dadurch einen möglichst großen Anteil eines Prozessraums mit dem ausgegebenen Sprühkegel beaufschlagen können.

Dies hat aber zur Folge, dass ein in Fig. 16 schraffiert dargestellter Anteil 94 des jeweils ausgegebenen Sprühkegels 92 auf die Sammelrohrleitung 88 trifft. Dadurch geht versprühtes Medium verloren, das beispielsweise nicht zur Gasreinigung verwendet werden kann und außerdem besteht die Gefahr, dass die ausgegebenen Sprühkegel 92 auf lange Sicht gesehen die Sammelrohrleitung 88 beschädigen.

Fig. 17 zeigt eine Seitenansicht der Anordnung der Fig. 16. Es ist gut zu erkennen, dass die Anteile 94 der ausgegebenen Sprühkegel 92 auf die Sammelrohrleitung 88 treffen.

Die Darstellung der Fig. 18 zeigt eine Draufsicht auf eine weitere Anordnung mit zwei konventionellen Drallsprühdüsen 96. Der Sprühwinkel der beiden Drallsprühdüsen 96 ist nun kleiner gewählt worden als bei den Drallsprühdüsen 86 der Fig. 16 und 17. Dadurch wird, siehe auch die Seitenansicht der Fig. 19, zwar vermieden, dass der ausgegebene Sprühkegel 98 auf die Sammelrohrleitung 88 trifft. Gleichzeitig muss aber auch in Kauf genommen werden, dass die Beaufschlagung durch die ausgegebenen Sprühkegel 98 wesentlich kleiner ist als bei den Drallsprühdüsen 86 der Fig. 16 und 17.

Fig. 20 zeigt eine Draufsicht auf eine Anordnung mit zwei erfindungsgemäßen Drallsprühdüsen 90. Die beiden Drallsprühdüsen 90 geben jeweils einen im Querschnitt ovalen Sprühkegel 102 aus. Es ist anhand der Fig. 20 zu erkennen, dass durch die Überlagerung der beiden Sprühkegel 102 eine großflächige Beaufschlagung des Prozessraums erreicht werden kann. Aus der Seitenansicht der Fig. 21 ist zu erkennen, dass gleichzeitig vermieden wird, dass die ausgegebenen Sprühkegel 102 auf die Sammelrohrleitung 88 auftreffen.

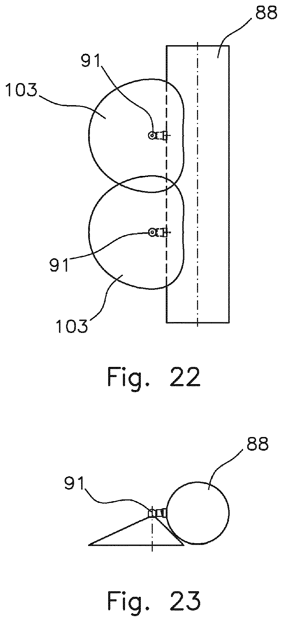

Die Darstellung der Fig. 22 zeigt eine Draufsicht auf eine Anordnung mit zwei erfindungsgemäßen Drallsprühdüsen 91. Die beiden Drallsprühdüsen 91 geben jeweils einen im Querschnitt unregelmäßig geformten Sprühkegel 103 aus. Die Sprühkegel 103 erstrecken sich in Richtung von der Sammelrohrleitung 88 weg weiter in den Prozessraum hinein als in Richtung auf die Sammelrohrleitung 88. Dadurch kann zum einen eine großflächige Beaufschlagung des Prozessraums erreicht werden und zum anderen wird vermieden, dass, siehe die Seitenansicht in Fig. 23, die ausgegebenen Sprühkegel 103 auf die Sammelrohrleitung 88 auftreffen.

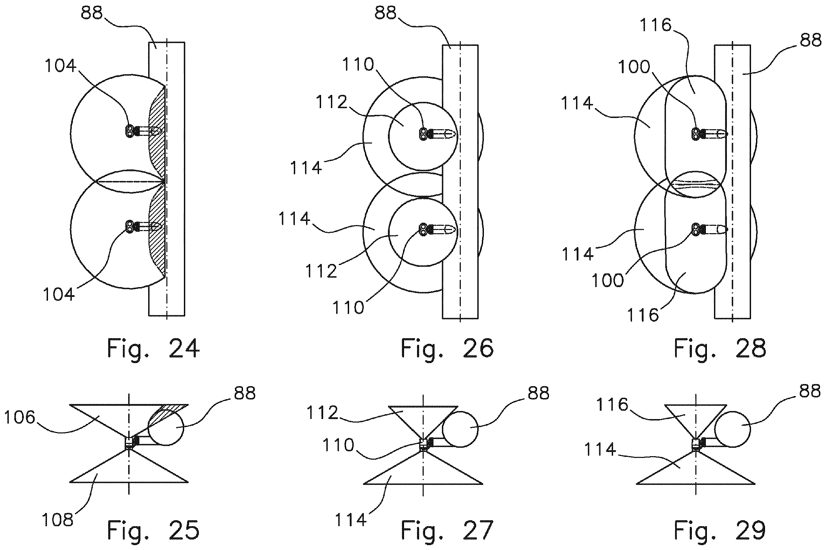

Die Darstellung der Fig. 24 zeigt eine Anordnung aus zwei konventionellen Doppeldrallsprühdüsen 104, wobei, siehe auch die Seitenansicht der Fig. 25, jede der Doppeldrallsprühdüsen 104 einen nach oben gerichteten Sprühkegel 106 und einen nach unten gerichteten Sprühkegel 108 ausgibt.

Die beiden Doppeldrallsprühdüsen 104 werden aus der gemeinsamen Sammelrohrleitung 88 gespeist. Um eine großflächige Beaufschlagung durch die Sprühkegel 106, 108 zu erzielen, werden große Sprühwinkel gewählt. In der Seitenansicht der Fig. 25 ist aber zu erkennen, dass der nach oben austretende Sprühkegel 106 teilweise auf die Sammelrohrleitung 88 trifft. Dadurch geht zum einen versprühtes Medium verloren, zum anderen besteht die Gefahr der Beschädigung der Sammelrohrleitung 88.

Die Darstellung der Fig. 26 zeigt eine Draufsicht auf eine Anordnung mit zwei konventionellen Doppeldrallsprühdüsen 110. Die Doppeldrallsprühdüsen 110 geben jeweils, siehe auch die Seitenansicht der Fig. 27, nach oben einen Sprühkegel 112 mit kleinem Sprühwinkel und nach unten einen Sprühkegel 114 mit großem Sprühwinkel aus. Dadurch kann, siehe die Seitenansicht der Fig. 27, zwar verhindert werden, dass die Sammelrohrleitung 88 durch die nach oben ausgegebenen Sprühkegel 112 besprüht wird. Allerdings ist die Beaufschlagung des Prozeßraums durch die nach oben ausgegebenen Sprühkegel 112 vergleichsweise klein und nicht zufriedenstellend.

Die Darstellung der Fig. 28 zeigt eine Anordnung mit zwei erfindungsgemäßen Doppeldrallsprühdüsen 100. Die Doppeldrallsprühdüsen 100 geben, siehe auch die Seitenansicht der Fig. 29, nach unten jeweils einen Sprühkegel 114 mit kreisförmigem Querschnitt aus und nach oben jeweils einen Sprühkegel 116 mit ovalem Querschnitt. Dadurch wird auch in Sprührichtung nach oben durch die Überlagerung der beiden im Querschnitt ovalen Sprühkegel 116 eine großflächige Beaufschlagung des Prozessraums erreicht, gleichzeitig kann aber auch sichergestellt werden, dass die Sammelrohrleitung 88 durch die nach oben ausgegebenen Sprühkegel 116 nicht besprüht wird.

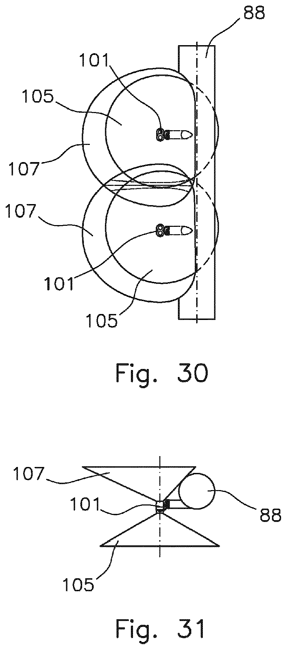

Die Darstellung der Fig. 30 zeigt eine Anordnung mit zwei erfindungsgemäßen Doppeldrallsprühdüsen 101. Jede der Doppeldrallsprühdüsen 101 gibt nach unten einen Sprühkegel 105 mit kreisförmigem Querschnitt aus und nach oben einen Sprühkegel 107 mit unregelmäßig geformtem Querschnitt. Wie in der Seitenansicht der Fig. 31 zu erkennen ist, wird durch den unregelmäßig geformtem Sprühkegel 107 erreicht, dass der Prozessraum großflächig beaufschlagt wird, die Sammelrohrleitung 88 aber nicht von dem nach oben ausgegebenen Sprühstrahl 107 getroffen wird. Die nach oben gerichteten Austrittsöffnungen der Doppeldrallsprühdüsen 101 sind hierzu so ausgebildet, dass sich der Sprühstrahl 107 von der Sammelrohrleitung 88 weg weiter in den Prozessraum hineinerstreckt als in Richtung auf die Sammelrohrleitung 88. Dies wird, wie erläutert wurde, dadurch erreicht, dass die Wandung der Austrittsöffnung auf der, der Sammelrohrleitung 88 zugewandten Seite einen steileren Winkel aufweist als auf der, der Sammelrohrleitung 88 abgewandten Seite.

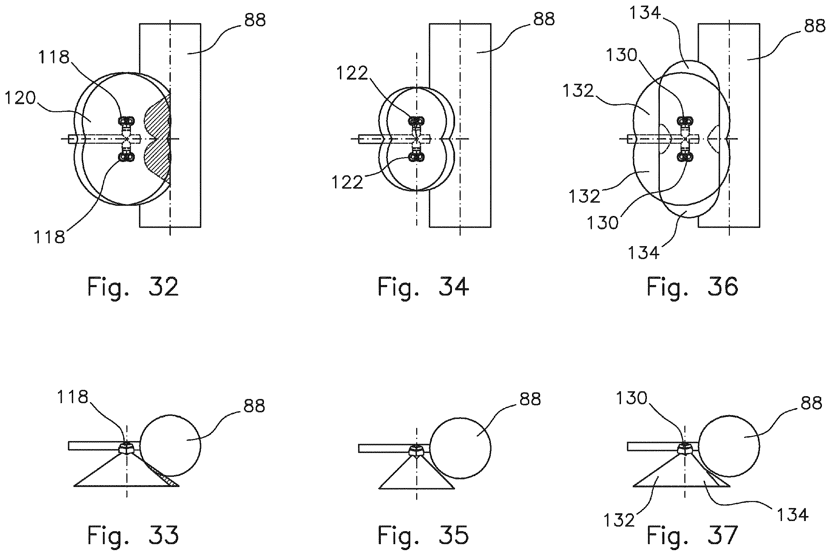

Die Darstellung der Fig. 32 zeigt eine Anordnung mit zwei konventionellen Doppeldrallsprühdüsen 118. Jede der Doppeldrallsprühdüsen 118 gibt zwei Sprühkegel mit jeweils kreisförmigem Querschnitt aus, wobei, wie in der Seitenansicht der Fig. 33 zu erkennen ist, die Mittelachsen der Drallkammern jeder Doppeldrallsprühdüse 118 in Sprührichtung gesehen leicht auseinanderlaufen. Die ausgegebene Sprühgeometrie 120 stellt zwar eine großflächige Abdeckung sicher, besprüht aber abschnittsweise die Sammelrohrleitung 88, siehe auch Fig. 33.

Fig. 34 zeigt eine weitere Anordnung mit zwei konventionellen Doppeldrallsprühdüsen 122, wobei im Vergleich zu den Doppeldrallsprühdüsen 118 der Fig. 32 und 33 ein kleinerer Sprühwinkel gewählt wurde. Wie Fig. 35 zu entnehmen ist, kann nun ein Besprühen der Sammelrohrleitung 88 vermieden werden, allerdings wird auch nur noch eine deutlich kleinere Fläche des Prozessraums mit dem versprühten Medium beaufschlagt, wie ohne Weiteres anhand eines Vergleichs der Fig. 32 und 34 bzw. 33 und 35 festgestellt werden kann.

Die Darstellung der Fig. 36 zeigt eine Draufsicht auf eine Anordnung mit zwei erfindungsgemäßen Doppeldrallsprühdüsen 130. Jede der Doppeldrallsprühdüsen 130 gibt zwei Sprühkegel aus, wobei der erste ausgegebene Sprühkegel 132 einen kreisförmigen Querschnitt aufweist und der zweite ausgegebene Sprühkegel 134 einen ovalen Querschnitt aufweist.

Die beiden Drallkammern der Doppeldrallsprühdüsen 130 sind in einem Winkel zueinander angeordnet, so dass sich ein Abstand zwischen den Mittelachsen der beiden Drallkammern in Sprührichtung gesehen vergrößert.

Der sich aus der Überlagerung der Sprühstrahlen 132, 134 ergebende Gesamtsprühstrahl weist nun eine unregelmäßige Form auf. Durch die Überlagerung kann aber erreicht werden, siehe auch die Seitenansicht der Fig. 37, dass eine großflächige Beaufschlagung des Prozessraums erzielt wird und gleichzeitig vermieden wird, dass die Sammelrohrleitung 88 besprüht wird. Es ist in der Darstellung der Fig. 37 zu erkennen, dass sich die Sprühkegel 132, 134 durchdringen und dadurch die sich ergebende, überlagerte Sprühgeometrie den Bereich der Sammelrohrleitung 88 ausspart.

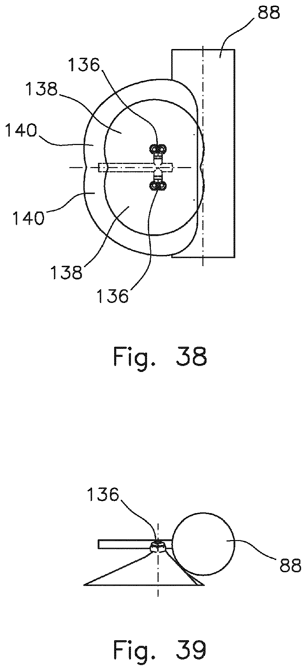

Die Darstellung der Fig. 38 zeigt eine weitere Anordnung mit zwei erfindungsgemäßen Doppeldrallsprühdüsen 136. Jede der Doppeldrallsprühdüsen gibt zwei Sprühkegel in annähernd gleicher Richtung nach unten aus, wobei ein erster Sprühkegel 138 einen kreisförmigen Querschnitt hat und ein zweiter Sprühkegel 140 einen unregelmäßig geformten Querschnitt hat. Der unregelmäßig geformte Querschnitt ist dabei so ausgebildet, dass sich der Sprühkegel 140 von der Doppeldrallsprühdüse 136 aus weiter in den Prozessraum hineinerstreckt, also von der Sammelrohrleitung weg, als in Richtung auf die Sammelrohrleitung 88 zu. In der Überlagerung der beiden Sprühstrahlen 138 mit den beiden Sprühstrahlen 140 ergibt sich die in der Seitenansicht der Fig. 39 dargestellte Sprühgeometrie. Zu erkennen ist, dass der Prozessraum großflächig abgedeckt wird, die Sammelrohrleitung 88 aber nicht beaufschlagt wird.

Ein wesentlicher Aspekt der Erfindung liegt somit darin, eine gewünschte Form einer Sprühbeaufschlagung durch Überlagerung von mindestens zwei Sprühkegeln zu erzeugen, wobei wenigstens einer der beiden Sprühkegel eine nicht kreisrunde Querschnittsform aufweist.

## Patentansprüche

1. Sprühdüse mit einem Düsengehäuse (12), wenigstens einer in dem Düsengehäuse (12) angeordneten Drallkammer (14, 16) und wenigstens einer Austrittsöffnung (18, 20), wobei die Austrittsöffnung (18, 20) am Ende eines Austrittskanals (22, 24) angeordnet ist, der von der Drallkammer (14, 16) ausgeht und sich in Richtung auf die Austrittsöffnung (18, 20) zu aufweitet, wobei am Übergang der Drallkammer (14, 16) in den Austrittskanal (22, 24)
eine Engstelle angeordnet ist, wobei der Winkel der Wandung des Austrittskanals von der Engstelle aus in Richtung auf die Austrittsöffnung (18, 20) stetig zunimmt oder abschnittsweise gleich bleibt, wobei die Form der Austrittsöffnung (18, 20) von einer Kreisform abweicht, wobei der Winkel der Wandung des Austrittskanals (22, 24) an der Austrittsöffnung (18, 20) in Umfangsrichtung der Austrittsöffnung (18, 20) gesehen nicht
konstant ist, und wobei ein Anschluss für eine zu versprühende Flüssigkeit vorgesehen ist, über den die zu versprühende Flüssigkeit der wenigstens einen Drallkammer tangential zugeführt wird, **dadurch gekennzeichnet, dass** der Austrittskanal (22, 24) am Übergang von der Drallkammer (14, 16) in den Austrittskanal (22, 24) einen kreisförmigen Querschnitt aufweist.

2. Sprühdüse nach Anspruch 1, **dadurch gekennzeichnet, dass** der Winkel der Wandung des Austrittskanals (22, 24) zur Mittellängsachse (32) des Austrittskanals (22, 24) an der Austrittsöffnung (18, 20) in einem Bereich zwischen 0 Grad und 90 Grad liegt.

3. Sprühdüse nach einem der vorstehenden Ansprüche, **dadurch gekennzeichnet, dass** der Winkel der Wandung des Austrittskanals (22, 24) an der Austrittsöffnung (18, 20) sich über den Umfang der Austrittsöffnung (18, 20) gesehen zwischen 25° und 70°, insbesondere zwischen 32,5° und 65°, ändert.

4. Sprühdüse nach einem der vorstehenden Ansprüche, **dadurch gekennzeichnet, dass** die Austrittsöffnung (18, 20) eine ovale oder elliptische Form aufweist.

5. Sprühdüse nach wenigstens einem der vorstehenden Ansprüche, **dadurch gekennzeichnet, dass** zwei Drallkammern (14, 16) und zwei Austrittsöffnungen (18, 20) vorgesehen sind, wobei die Austrittsöffnungen (18, 20) so angeordnet sind, dass Sprühstrahlen durch beide Austrittsöffnungen (18, 20) zur gleichen Seite des Gehäuses (12) hin austreten.

6. Sprühdüse nach wenigstens einem der vorstehenden Ansprüche 1 bis 4, **dadurch gekennzeichnet, dass** zwei Drallkammern und zwei Austrittsöffnungen vorgesehen sind, wobei die Austrittsöffnungen so angeordnet sind, dass Sprühstrahlen durch die beiden Austrittsöffnungen zu gegenüberliegenden Seiten des Gehäuses hin austreten.

7. Sprühdüse nach wenigstens einem der vorstehenden Ansprüche, **dadurch gekennzeichnet, dass** das Düsengehäuse (12) gegossen oder gespritzt und nachfolgend gebrannt oder gesintert wird.

8. Verfahren zum Erzeugen eines Sprühkegels mit nicht rundem Querschnitt mittels einer Sprühdüse, mit den Schritten:
- Einleiten der zur versprühenden Flüssigkeit in eine Drallkammer und
- Erzeugen eines Dralls zum Erzeugen von Fliehkräften auf die durch die Drallkammer strömende Flüssigkeit,
- Drosseln und Einstellen einer Menge der aus der Drallkammer ausströmenden Flüssigkeit mittels einer Engstelle zwischen Drallkammer und einem Austrittskanal, der an einer Austrittsöffnung der Sprühdüse endet,
wobei mittels der Engstelle die zu versprühende Flüssigkeit gleichmäßig auf den Umfang der Engstelle verteilt wird,
- Formen des Sprühkegels mit nicht rundem Querschnitt im Austrittskanal durch Vorgeben des Abflugwinkels der Tropfen im Austrittskanal mittels der Wandung des Austrittskanals, der sich ausgehend von der Engstelle bis zur Austrittsöffnung über seinen Umfang gesehen wenigstens abschnittsweise mit unterschiedlichen Winkeln zu einer Mittelachse des Austrittskanals bis zu der Austrittsöffnung aufweitet, **dadurch gekennzeichnet, dass** der Austrittskanal (22, 24) am Übergang von der Drallkammer (14, 16) in den Austrittskanal (22, 24) einen kreisförmigen Querschnitt aufweist.

9. Verfahren nach Anspruch 8, **gekennzeichnet durch** Überlagern von mindestens zwei Sprühkegeln, wobei wenigstens einer der Sprühkegel in einer Ebene parallel zur Austrittsöffnung gesehen eine von der Kreisform abweichende Querschnittsform hat.

## Claims

1. Spray nozzle having a nozzle housing (12), at least one swirl chamber (14, 16) which is disposed in the nozzle housing (12), and at least one exit opening (18, 20), wherein the exit opening (18, 20) is disposed at the end of an exit duct (22, 24) which emanates from the swirl chamber (14, 16) and widens in the direction towards the exit opening (18, 20), wherein a constriction is disposed at the transition from the swirl chamber (14, 16) to the exit duct (22, 24), wherein the angle of the wall of the exit duct, starting from the constriction, steadily increases in the direction towards the exit opening (18, 20) or in portions remains identical, wherein the shape of the exit opening (18, 20) deviates from a circular shape, wherein the angle of the wall of the exit duct (22, 24) at the exit opening (18, 20), when viewed in the circumferential direction of the exit opening (18, 20), is not constant, and wherein a connector for a liquid to be sprayed is provided, and the liquid to be sprayed is supplied via the connector to the at least one swirl chamber in a tangential manner, **characterized in that** the exit duct (22, 24) at the transition from the swirl chamber (14, 16) to the exit duct (22, 24) has a circular cross section.

2. Spray nozzle according to Claim 1, **characterized in that** the angle of the wall of the exit duct (22, 24) in relation to the longitudinal central axis (32) of the exit duct (22, 24) at the exit opening (18, 20) is in a range between 0 degrees and 90 degrees.

3. Spray nozzle according to one of the preceding claims, **characterized in that** the angle of the wall of the exit duct (22, 24) at the exit opening (18, 20), when viewed across the circumference of the exit opening (18, 20), varies between 25° and 70°, in particular between 32.5° and 65°.

4. Spray nozzle according to one of the preceding claims, **characterized in that** the exit opening (18, 20) has an oval or elliptic shape.

5. Spray nozzle according to at least one of the preceding claims, **characterized in that** two swirl chambers (14, 16) and two exit openings (18, 20) are provided, wherein the exit openings (18, 20) are disposed such that spray jets exit through the two exit openings (18, 20) on the same side of the housing (12).

6. Spray nozzle according to at least one of the preceding Claims 1 to 4, **characterized in that** two swirl chambers and two exit openings are provided, wherein the exit openings are disposed such that spray jets exit through the two exit openings on opposite sides of the housing.

7. Spray nozzle according to at least one of the preceding claims, **characterized in that** the nozzle housing (12) is cast or injection-moulded and is subsequently fired or sintered.

8. Method for producing a spray cone having a non-round cross section by means of a spray nozzle, the method comprising the steps:
- introducing the liquid to be sprayed into a swirl chamber, and
- producing a swirl in order to produce centrifugal forces acting on the liquid streaming through the swirl chamber,
- choking and adjusting an amount of the liquid streaming from the swirl chamber by means of a constriction between the swirl chamber and an exit duct which ends at an exit opening of the spray nozzle,
wherein by means of the constriction the liquid to be sprayed is uniformly distributed across the circumference of the constriction,
- shaping the spray cone having a non-round cross section in the exit duct by predefining the departure angle of the droplets in the exit duct by means of the wall of the exit duct, which exit duct, proceeding from the constriction up to the exit opening, when viewed across the circumference of said spray cone, at least in portions widens at dissimilar angles to a central axis of the exit duct up to the exit opening, **characterized in that** the exit duct (22, 24) at the transition from the swirl chamber (14, 16) to the exit duct (22, 24) has a circular cross section.

9. Method according to Claim 8, **characterized by** superimposing at least two spray cones, wherein at least one of the spray cones, when viewed in a plane which is parallel with the exit opening, has a cross-sectional shape which deviates from the circular shape.

## Revendications

1. Buse de pulvérisation comprenant un boîtier de buse (12), au moins une chambre de tourbillon (14, 16) disposée dans le boîtier de buse (12) et au moins une ouverture de sortie (18, 20), l'ouverture de sortie (18, 20) étant disposée à l'extrémité d'un canal de sortie (22, 24) qui émane de la chambre de tourbillon (14, 16) et s'élargit en direction de l'ouverture de sortie (18, 20), un passage étroit étant disposé au niveau de la transition de la chambre de tourbillon (14, 16) au canal de sortie (22, 24), l'angle de la paroi du canal de sortie à partir du passage étroit en direction de l'ouverture de sortie (18, 20) augmentant continuellement ou restant identique dans certaines portions, la forme de l'ouverture de sortie (18, 20) étant différente d'une forme circulaire, l'angle de la paroi du canal de sortie (22, 24) au niveau de l'ouverture de sortie (18, 20), vu dans la direction périphérique de l'ouverture de sortie (18, 20), n'étant pas constant, et un raccord pour un liquide à pulvériser étant présent, par le biais duquel le liquide à pulvériser est acheminé de manière tangentielle à l'au moins une chambre de tourbillon, **caractérisée en ce que** le canal de sortie (22, 24) possède une section transversale circulaire au niveau de la transition de la chambre de tourbillon (14, 16) au canal de sortie (22, 24).

2. Buse de pulvérisation selon la revendication 1, **caractérisée en ce que** l'angle de la paroi du canal de sortie (22, 24) par rapport à l'axe longitudinal central (32) du canal de sortie (22, 24) au niveau de l'ouverture de sortie (18, 20) est compris dans une plage entre 0 degré et 90 degrés.

3. Buse de pulvérisation selon l'une des revendications précédentes, **caractérisée en ce que** l'angle de la paroi du canal de sortie (22, 24) au niveau de l'ouverture de sortie (18, 20), vu sur le pourtour de l'ouverture de sortie (18, 20), varie entre 25° et 70°, notamment entre 32,5° et 65°.

4. Buse de pulvérisation selon l'une des revendications précédentes, **caractérisée en ce que** l'ouverture de sortie (18, 20) présente une forme ovale ou elliptique.

5. Buse de pulvérisation selon au moins l'une des revendications précédentes, **caractérisée en ce que** deux chambres de tourbillon (14, 16) et deux ouvertures de sortie (18, 20) sont présentes, les ouvertures de sortie (18, 20) étant disposées de telle sorte que des jets de pulvérisation sortent à travers les deux ouvertures de sortie (18, 20) vers le même côté du boîtier (12).

6. Buse de pulvérisation selon au moins l'une des revendications précédentes 1 à 4, **caractérisée en ce que** deux chambres de tourbillon et deux ouvertures de sortie sont présentes, les ouvertures de sortie étant disposées de telle sorte que des jets de pulvérisation sortent à travers les deux ouvertures de sortie vers des côtés opposés du boîtier.

7. Buse de pulvérisation selon au moins l'une des revendications précédentes, **caractérisée en ce que** le boîtier de buse (12) est moulé ou injecté et ensuite cuit ou fritté.

8. Procédé de génération d'un cône de pulvérisation ayant une section transversale non ronde au moyen d'une buse de pulvérisation, comprenant les étapes suivantes :
- introduction du liquide à pulvériser dans une chambre de tourbillon et
- génération d'un tourbillon en vue de générer des forces centrifuges sur le liquide qui s'écoule à travers la chambre de tourbillon,
- étranglement et réglage d'une quantité de liquide s'écoulant hors de la chambre de tourbillon au moyen d'un passage étroit entre la chambre de tourbillon et un canal de sortie qui se termine au niveau d'une ouverture de sortie de la buse de pulvérisation,
le liquide à pulvériser étant distribué régulièrement sur le pourtour du passage étroit au moyen du passage étroit,
- formation du cône de pulvérisation ayant une section transversale non ronde dans le canal de sortie par prédéfinition de l'angle d'envol des gouttelettes dans le canal de sortie au moyen de la paroi du canal de sortie qui, vu sur son pourtour, s'élargit à partir du passage étroit jusqu'à l'ouverture de sortie au moins dans certaines portions avec des angles différents par rapport à un axe central du canal de sortie jusqu'à l'ouverture de sortie, **caractérisé en ce que** le canal de sortie (22, 24) possède une section transversale circulaire au niveau de la transition de la chambre de tourbillon (14, 16) au canal de sortie (22, 24).

9. Procédé selon la revendication 8, **caractérisé par** la superposition d'au moins deux cônes de pulvérisation, au moins l'un des cônes de pulvérisation, vu dans un plan parallèle à l'ouverture de sortie, présentant une forme de section transversale différente de la forme circulaire.
